(19) Europäisches Patentamt
European Patent Office
Office européen des brevets

(11) **EP 4 207 338 A1**

(12) **EUROPEAN PATENT APPLICATION**
published in accordance with Art. 153(4) EPC

(43) Date of publication:
**05.07.2023 Bulletin 2023/27**

(21) Application number: **22742735.8**

(22) Date of filing: **05.01.2022**

(51) International Patent Classification (IPC):
$H01M\ 4/04^{(2006.01)}$    $H01M\ 4/139^{(2010.01)}$
$H01M\ 4/62^{(2006.01)}$    $H01M\ 4/66^{(2006.01)}$
$H01M\ 10/052^{(2010.01)}$    $H01M\ 10/42^{(2006.01)}$
$H01M\ 50/586^{(2021.01)}$

(52) Cooperative Patent Classification (CPC):
H01M 4/04; H01M 4/139; H01M 4/62; H01M 4/66;
H01M 10/052; H01M 10/42; H01M 50/586

(86) International application number:
**PCT/KR2022/000117**

(87) International publication number:
**WO 2022/158759 (28.07.2022 Gazette 2022/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.01.2021 KR 20210007628
04.01.2022 KR 20220000797**

(71) Applicant: **LG Energy Solution, Ltd.
Seoul 07335 (KR)**

(72) Inventors:
• **CHUNG, Kooseung
Daejeon 34122 (KR)**

• **LEE, Nam Jeong
Daejeon 34122 (KR)**
• **KWAK, Sang Min
Daejeon 34122 (KR)**
• **LEE, Kiseok
Daejeon 34122 (KR)**
• **SHIN, Dong Oh
Daejeon 34122 (KR)**
• **YOO, Kwang Ho
Daejeon 34122 (KR)**

(74) Representative: **Plasseraud IP
66, rue de la Chaussée d'Antin
75440 Paris Cedex 09 (FR)**

(54) **METHOD FOR MANUFACTURING DRY ELECTRODE FOR ENERGY STORAGE DEVICE, DRY ELECTRODE, AND SECONDARY BATTERY COMPRISING SAME**

(57) The present disclosure relates to a method for manufacturing a dry electrode for energy storage device, which can form a uniform insulating film on the edge part of the dry electrode and thus enables formation of a dry electrode having excellent physical properties, a dry electrode formed by this method and a secondary battery comprising the same.

[FIG. 1]

EP 4 207 338 A1

**Description**

**[TECHNICAL FIELD]**

Cross Citation with Related Application(s)

This application claims the benefit of Korean Patent Application No. 1 0-2021-0007628 filed on January 19, 2021, and Korean Patent Application No. 10-2022-0000797 filed on January 4, 2022, in the Korean Intellectual Property Office, the disclosure of which is incorporated herein by reference in its entirety.

The present disclosure relates to a method for manufacturing a dry electrode for energy storage device, which forms a uniform insulating film on the edge part of the dry electrode and thus enables formation of a dry electrode having excellent physical properties, a dry electrode formed by this method, and a secondary battery comprising the same.

**[BACKGROUND]**

Due to the rapid increase in the use of fossil fuels, the demand for the use of alternative energy or clean energy is increasing, and as a part thereof, the fields that are being studied most actively are the fields of power generation and power storage using electrochemistry. Currently, a secondary battery is a representative example of an electrochemical device that utilizes such electrochemical energy, and the range of use thereof tends to be gradually expanding.

Among these secondary batteries, a typical lithium secondary battery is being used not only as an energy source for mobile devices, but also as a power source for an electric vehicle and a hybrid electric vehicle which can replace a vehicle using fossil fuels such as a gasoline vehicle and a diesel vehicle, which are one of the main causes of air pollution. The area of use is being expanded even in applications such as electric power auxiliary power source through grid formation.

The manufacturing process of such a lithium secondary battery is largely divided into three processes: an electrode process, an assembly process, and a formation process. The electrode process is again divided into an active material mixing process, an electrode coating process, a drying process, a rolling process, a slitting process, a winding process, and the like.

In the conventional electrode process, solvents of various components and/or large amounts of solvent for dispersion including electrode active material or conductive material are used during the active material mixing process. In electrode coating, the electrode was formed by a wet process of applying the electrode mixture composition in the form of a slurry onto the current collector and then removing the solvent through drying.

However, when the electrode is formed by such a wet process, in the process in which the solvent is evaporated and removed, defects such as pinholes or cracks may be induced in the electrode active material layer. In addition, not only a considerable amount of energy is required to remove a large amount of solvent in the drying process, but also a large-sized and expensive drying device is required and thus, there is a drawback that the overall processability of the secondary battery is greatly deteriorated.

In order to solve the drawbacks of such wet process, recently, research on a method for manufacturing a dry electrode of a secondary battery through a dry process that does not use a solvent has been actively conducted.

In the previously proposed method for manufacturing the dry electrode, a method, in which an electrode active material particle, a conductive material, a fiberizable organic binder and the like are mixed in a solid state and kneaded by applying a shearing force to obtain a powder for dry electrode, and then this powder for dry electrode is subjected to calendaring processing and produced into a mixture film for dry electrode, was mainly applied.

On the other hand, when the secondary battery is operated in an abnormal situation such as a harsh environment or an overcurrent, a short circuit may occur between a positive electrode and a negative electrode facing each other. For this reason, an insulating layer capable of suppressing the occurrence of the short circuit is generally formed on the edge part (uncoated part) where the active material layer of the positive electrode is not formed from the past.

However, in the above-mentioned conventional dry electrode manufacturing method, a method of forming a uniform insulating layer on the edge part of the positive electrode on which the electrode mixture film is not formed has not been properly proposed. In particular, in the case of the electrode mixture film formed by the conventional dry method, the slitting process due to the non-uniformity of the edge part was often added, which caused inefficiency and cost increase of the overall process.

In order to solve the above problems, after forming the dry electrode by the conventional method, a method of separately forming an insulating layer on the edge part through the previous wet coating process has been considered, but in this case, a separate drying device/process or the like for forming the insulating layer is required, so that a considerable portion of the advantages can be diluted by applying the dry process.

Therefore, there is a need for continuous technology development for a manufacturing process of a dry electrode that enables the formation of a uniform insulating layer or the like on the edge part of the dry electrode.

**[DETAILED DESCRIPTION OF THE INVENTION]**

**[Technical Problem]**

The present disclosure provides a method for manufacturing a dry electrode for energy storage device which forms a uniform insulating film on the edge part of the dry electrode and thus enables formation of a dry electrode having excellent physical properties.

Further, the present disclosure provides a dry electrode film or a dry electrode for energy storage device that is manufactured by the above method, includes a uniform insulating film at the edge part and is excellent in various physical properties.

In addition, the present disclosure provides a secondary battery including the dry electrode.

**[Technical Solution]**

According to one embodiment of the present disclosure, there is provided a method for manufacturing a dry electrode for energy storage device, comprising the steps of: dry-mixing 30 to 85% by weight of an insulating inorganic particle and 15 to 70% by weight of a fiberizable organic binder under application of a shearing force to form a dry insulating powder; charging the dry insulating powder between a plurality of rolls and subjecting to calender processing to form an insulating film for dry electrode; and laminating the insulating film for dry electrode on a metal current collector.

In one embodiment of the manufacturing method, the step of forming a dry insulating powder comprises, (a) forming a mixture containing the insulating inorganic particle and the organic binder; (b) kneading the mixture at a temperature of 70°C to 200°C and a pressure equal to or higher than a normal pressure to form a mixture mass containing an insulating inorganic particle and a fiberized organic binder; and (c) pulverizing the mixture mass to form a dry insulating powder.

The present disclosure also provides a dry electrode film for energy storage device, comprising: a film-like active material layer containing an electrode active material particle, a conductive material, and a fiberized organic binder; and a film-like insulating layer formed on at least one side edge part of the film-like active material layer and containing an insulating inorganic particle and a fiberized organic binder. The dry electrode film itself can be used as a dry electrode for energy storage device such as a secondary battery, or may be used as an intermediate or the like for manufacturing such a dry electrode.

In addition, the present disclosure provides a dry electrode for energy storage device, comprising an electrode film which comprises: a mixture film for dry electrode; and an insulating film for dry electrode formed on at least one side edge part thereof,

wherein the insulating film for dry electrode comprises an insulating inorganic particle and a fiberized organic binder, and has a resistance of 500 MΩ or more.

Further, the present disclosure provides a secondary battery in which an electrode assembly containing a positive electrode, a negative electrode, and a separator is built into a battery case together with a lithium-containing non-aqueous electrolyte, wherein the positive electrode or the negative electrode comprises the dry electrode film or the dry electrode.

**[ADVANTAGEOUS EFFECTS]**

According to embodiments of the present disclosure, a uniform insulating film can be formed on the edge part of the dry electrode by a dry process without using a separate wet process.

Therefore, the present disclosure can minimize the problems such as a short circuit occurring at the edge part between the electrodes, thereby further improving the safety of the secondary battery including the dry electrode. Further, the disadvantage that a slitting process is added due to the non-uniformity of the edge part in the dry electrode formed by the conventional method can also be solved.

Further, according to the present disclosure, the dry electrode can be manufactured in a simplified process by forming the insulating film together with the electrode mixture film without applying a wet process. Thus, while taking advantage of the dry process which eliminates the use of a large amount of solvent or the use of a drying process/device, a dry electrode having excellent physical properties can be manufactured very simply and easily

Therefore, the present disclosure can greatly contribute to improving the overall characteristics of the secondary battery, reducing the process cost, and improving the efficiency of the process.

**[BRIEF DESCRIPTION OF THE DRAWINGS]**

Fig. 1 is a process flowchart for an example of a method for manufacturing a dry electrode according to an embodiment of the present disclosure;

Fig. 2 is a schematic diagram schematically showing an example of a process of performing a calender processing in a method of manufacturing a dry electrode according to an embodiment of the present disclosure;

Fig. 3 is a cross-sectional view briefly showing an example of a dry electrode according to another embodiment of the present disclosure; and

Fig. 4 is a graph showing an evaluation result of an electrochemical test (evaluation of the side reaction of insulating film) for the electrode films of Examples 1 to 3.

## [DETAILED DESCRIPTION OF THE EMBODIMENTS]

Hereinafter, a dry electrode for energy storage device, a manufacturing method thereof, and a secondary battery according to embodiments of the present disclosure will be described in detail with reference to the accompanying drawings.

Terms or words used in the present specification and claims should not be construed as limited to ordinary or dictionary terms, and the present disclosure should be construed with meanings and concepts that are consistent with the technical idea of the present disclosure based on the principle that the inventors may appropriately define concepts of the terms to appropriately describe their own disclosure in the best way.

The technical terms provided herein is merely used for the purpose of describing particular embodiments only, and is not intended to be limiting of the present disclosure. The singular forms "a," "an," and "the" are intended to include the plural forms as well, unless the context clearly indicates otherwise.

Further, throughout the specification, when a portion is referred to as "including" a certain component, it means that the portion can further include other components, without excluding the other components, unless otherwise stated.

According to one embodiment of the present disclosure, there is provided a method for manufacturing a dry electrode for energy storage device, comprising the steps of: dry-mixing 30 to 85% by weight of an insulating inorganic particle and 15 to 70% by weight of a fiberizable organic binder under application of a shearing force to form a dry insulating powder; charging the dry insulating powder between a plurality of rolls and subjecting to calender processing to form an insulating film for dry electrode; and laminating the insulating film for dry electrode on a metal current collector.

In the method of one such embodiment, an insulating inorganic particle and an organic binder are mixed in a predetermined amount and kneaded under application of a shearing force, and then the dry insulating powder formed therefrom can be subjected to a calender processing to form an insulating film for dry electrode.

As confirmed in the following examples and the like, a uniform insulating film included in the dry electrode can be formed through the dry process. As will be described in more detail below, such an insulating film may be formed together in the same process as a mixture film for dry electrode. As a result, it becomes possible to form a uniform insulating film on the edge part of the dry electrode without using a separate wet process.

Therefore, according to the method of one embodiment, in a secondary battery including a dry electrode, a problem such as a short circuit occurring at an edge part between both electrodes can be minimized, and thus the safety of the secondary battery can be further improved. Further, it is possible to solve the drawback that a slitting process is added due to the non-uniformity of the edge part in the dry electrode formed by the conventional method, and it becomes not necessary to proceed the wet process for forming the insulating film, whereby the advantages of the dry process can be maximized.

However, in the manufacturing method of the present embodiment, a subsequent process is carried out in a state in which 30 to 85 % by weight of the insulating inorganic particles and 15 to 70 % by weight of the organic binder are mixed, thereby manufacturing an insulating film and a dry electrode.

If the content of the organic binder is too large outside the above range, the organic binder is excessively fiberized in a subsequent kneading process, which may adversely affect the process progress for forming the insulating film. In addition, if the content of the organic binder is too small, as confirmed in Comparative Examples described later, sufficient fiberization may not be achieved, so that agglomeration may not be achieved to the extent that a mixture mass is formed, or an insulating film for dry electrode may not be properly formed, or its physical properties may be deteriorated.

Unlike this, as the mixed content of the insulating inorganic particle and the organic binder is optimized and the subsequent steps are appropriately carried out, it is possible to manufacture an insulating film and a dry electrode with excellent physical properties that minimize problems such as short-circuit occurring at the edge part between electrodes and improve the stability of the secondary battery.

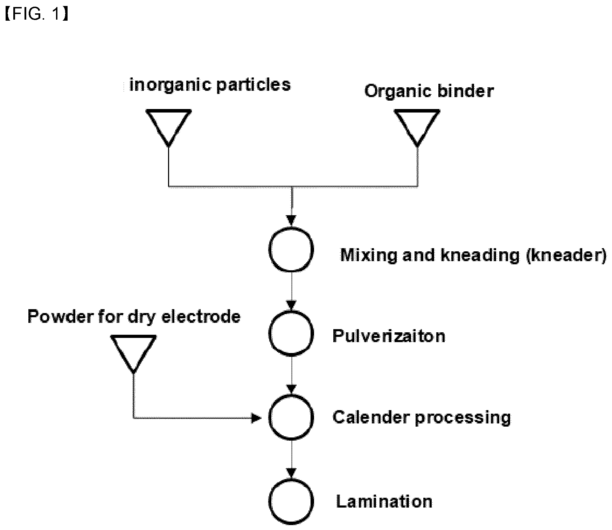

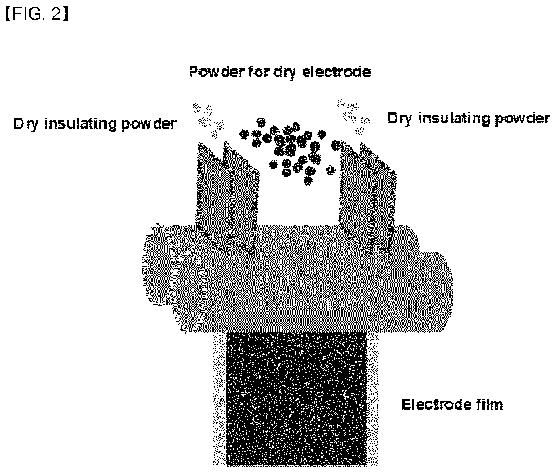

Next, the method of one embodiment will be described in more detail for each step with reference to the accompanying drawings. Fig. 1 is a process flowchart for an example of a method for manufacturing a dry electrode according to an embodiment of the present disclosure. Fig. 2 is a schematic diagram schematically showing an example of a process of performing a calender processing in a method of manufacturing a dry electrode according to an embodiment of the present disclosure.

Referring to FIG. 1, in the method of one embodiment, a mixture containing an insulating inorganic particle and an organic binder in a predetermined content is first prepared.

At this time, the mixing step is performed so that the insulating inorganic particle and the organic binder can be uniformly distributed, and is mixed in a powder form. It is not limited as long as it enables simple mixing thereof, and can be mixed by various methods. However, since a solvent is not used in the method of one embodiment, the mixing can be performed by dry mixing, or can be performed by adding the above materials to a device such as a blender.

Further, the mixing can be carried out in a mixer at 5000 rpm to 20000 rpm for 30 seconds to 2 minutes, and specifically at 10000 rpm to 15000 rpm for 30 seconds to 1 minute in order to ensure uniformity.

Meanwhile, the type of the insulating inorganic particle to be mixed is not particularly limited, and for example, any inorganic oxide particle previously known to be usable for forming an insulating layer in a secondary battery can be used. More specifically, the insulating inorganic particle that can be used includes one or more inorganic oxide particles selected from the group consisting of $Al_2O_3$, $SiO_2$, $TiO_2$, MgO, CaO, PaO, ZnO, $Fe_2O_3$, kaolin, and boehmite.

Further, as the fiberizable organic binder, any polymeric binder that can be formed in the form of fine fibers under application of a shearing force can be used. Specific examples of the organic binder include a polytetrafluoroethylene (PTFE)-based polymer, a polyvinylidene fluoride (PVDF) polymer, a polyolefin-based polymer, or a mixture thereof, more suitably, a polymer binder including polytetrafluoroethylene or polyvinylidene fluoride can be used. At this time, the polytetrafluoroethylene or polyvinylidene fluoride can be contained in an amount of 60% by weight or more, or 70 to 100% by weight based on the total weight of the organic binder.

Further, the organic binder may further include other fiberized binder such as polyethylene oxide (PEO).

Meanwhile, in the mixing step, 30 to 85% by weight, or 40 to 80% by weight of the insulating inorganic particle, and 15 to 70% by weight, or 20 to 60% by weight of the organic binder may be dry-mixed.

As already described above, when the content of the organic binder is too large outside the above range, it may adversely affect the process progress for forming the insulating film. Further, when the content of the organic binder is too small, the insulating film for dry electrode may not be properly formed or its physical properties may be deteriorated.

After the mixing step described above, a kneading step can be carried out under application of a shearing force for fiberizing the organic binder in the mixture.

At this time, the kneading step can be carried out, for example, using a kneading machine such as a kneader. Through the kneading step, insulating inorganic particles can be bonded or linked while fiberizing the organic binder and thus, a mixture mass having a solid content of 100 wt.% can be formed.

Specifically, the kneading step can be carried out at a speed of 10 rpm to 100 rpm for 1 minute to 30 minutes. Specifically, it can be carried out at a speed of 40 rpm to 70 rpm for 3 minutes to 7 minutes. At this time, the shear rate may be in the range of 10/s to 500/s. The shear rate may be, more specifically, in the range of 30/s to 100/s. As the kneading step is carried out under these conditions, an appropriate shearing force is applied so that the organic binder can be fiberized to a desired level. In a subsequent step, an insulating film for dry electrode can be preferably obtained.

Further, the kneading step may be carried out under the conditions of a high temperature and a pressure equal to or higher than a normal pressure. More specifically, it may be carried out under the condition of a pressure higher than the normal pressure. More specifically, the kneading can be carried out in the range of 70°C to 200°C, and specifically, 90°C to 180°C, and it can be carried out under a pressure of 1 atm to 3 atm, and more specifically, under a pressure of 1.1 atm to 3 atm.

When the temperature or pressure of the kneading process is too low, fiberization of the organic binder and mass formation by kneading are not sufficiently performed, film formation may not be easily performed at the time of a subsequent calender processing. Further, when the temperature or pressure of the kneading step is too high, excessive shearing force or pressure is applied, fiberization of the organic binder occurs rapidly, the fibers of the already formed organic binder are cut by excessive shearing force or pressure, or the density of the mixture mass becomes too high, so that subsequent calender processing and the like may not be properly performed.

Meanwhile, referring to Fig. 1, after the kneading step described above, the step of re-pulverizing the resulting mixture mass to form dry insulating powder may be carried out.

Specifically, the mixture mass prepared through the kneading step may be subjected directly to a calendar processing, but in this case, it may be necessary to press the mixture mass under strong pressure and high temperature to form a thin film, whereby the density of the film may become too high or a problem that a uniform film cannot be obtained may occur. Therefore, in the method of one embodiment, the prepared mixture mass is pulverized to form a dry insulating powder.

At this time, the pulverization is not limited, but may be performed with a device such as a blender or grinder. Specifically, the pulverization may be performed at a speed of 5000 rpm to 20000 rpm for 30 seconds to 10 minutes, and specifically, at a speed of 10000 rpm to 18000 rpm for 30 seconds to 5 minutes.

If the pulverization is performed at too low rpm or performed for a short time outside the above range, there is a problem that sufficient pulverization is not performed and thus, a powder having a size unsuitable for film formation may be generated. When pulverization is performed at too high rpm or performed for a too long time, a large amount of fine powder can be generated in the mixture mass, which is not preferable.

After forming the dry insulating powder by the method described above, such dry insulating powder can be charged between a plurality of rolls and subjected to a calender processing to form an insulating film for dry electrode. Such an insulating film can function, for example, as a uniform insulating layer included in the edge part of the electrode, such as a positive electrode, and can act to suppress a short circuit between both electrodes of the secondary battery.

Therefore, in the laminating step described later, such an insulating film for dry electrode may be laminated on a metal current collector together with a mixture film for dry electrode. At this time, the mixture film for dry electrode may be formed in a state of being separated from the insulating film through a separate calender processing, and the like, but it can be formed together in a calender processing for forming the insulating film.

For this purpose, in the calender processing step, the dry insulating powder and the separately formed dry electrode powder are charged between a plurality of rolls, so that an insulating film for dry electrode and a mixture film for dry electrode can be formed together.

In a more specific embodiment, as shown in FIG. 2, the dry insulating powder may be charged between the plurality of rolls on one side or both sides of the powder for dry electrode. When the calender processing is carried out under the charging of these dry insulating powder and dry electrode powder, an electrode film including the mixture film for dry electrode and the insulating film for dry electrode formed on at least one side (or both side) edge parts thereof may be formed. In such a step, the insulating film can be uniformly formed on the edge part of the mixture film, a short circuit between electrodes can be suppressed to thus ensure the safety of the secondary battery, and it is possible to solve problems that the edge part of the mixture film in the existing dry electrodes becomes non-uniform and the electrode slitting step is added.

Meanwhile, the powder for dry electrode for forming the dry electrode mixture film may be in the form of a powder including an electrode active material particle, a conductive material, and a fiberized organic binder, and may be formed by a method of manufacturing a dry electrode known from before. Alternatively, the powder for dry electrode may be prepared by mixing the electrode active material particle, the conductive material, and the fiberized organic binder and kneading it under application of a shearing force in a similar manner to the dry insulating powder described above, and pulverizing the mixture mass formed by the kneading step. As described above, the powder for dry electrode may be charged together with the dry insulating powder or charged between a plurality of rolls separately from that to form a mixture film for dry electrode.

However, the conventional dry electrode manufacturing method which is applicable for the manufacture of the powder for dry electrode is well known to those skilled in the art, and the method for producing a dry insulating powder which is similarly applicable for the production thereof, has already been sufficiently described. Further, a process similar to the calender processing for forming the above-mentioned insulating film may be applied to such a powder for dry electrode to produce a mixture film. The additional description regarding the production of the powder and mixture film for the dry electrode will be omitted.

Meanwhile, since the dry electrode manufactured by the method of one embodiment can be a positive electrode or a negative electrode of a secondary battery, the electrode active material particles included in the mixture film may be positive electrode active material particles or negative electrode active material particles, depending on the type of the electrode.

In this case, the positive electrode active material particle may include a positive electrode active material such as lithium transition metal oxide, lithium metal iron phosphate oxide, or metal oxide. For example, the positive electrode active material may be a layered compound such as lithium nickel oxide ($LiNiO_2$) or a compound substituted with one or more transition metals; lithium manganese oxides such as chemical formulae $Li_{1+x}Mn_{2-x}O_4$ (where x is 0 to 0.33), $LiMnOs$, $LiMn_2O_3$, $LiMnO_2$; lithium copper oxide ($Li_2CuO_2$); vanadium oxides such as $LiV_3O_8$, $LiFe_3O_4$, $V_2O_5$, and $Cu_2V_2O_7$; a Ni-site type lithium nickel oxide represented by chemical formula $LiNi_{1-x}M_xO_2$ (where M = Co, Mn, Al, Cu, Fe, Mg, B or Ga, and x= 0.01 ~ 0.3); lithium manganese composite oxide represented by chemical formulae $LiMn_{2-x}M_xO_2$ (where M = Co, Ni, Fe, Cr, Zn or Ta, and x = 0.01 ~ 0.1) or $Li_2Mn_3MO_8$ (where M = Fe, Co, Ni, Cu or Zn ); $LiMn_2O_4$ with a Li portion of the chemical formula substituted with an alkaline earth metal ion; a disulfide compound; $Fe_2(MoO_4)_3$, and the like, and additionally, various positive electrode active materials may be used.

Further, the negative electrode active material particle may include carbons such as hardly graphitizable carbon and graphite-based carbon, metal composite oxides such as $Li_xFe_2O_3 (0 \leq x \leq 1)$, $Li_xWO_2 (0 \leq x \leq 1)$, $Sn_xMe_{1-x}Me'_yO_z$ (Me: Mn, Fe, Pb, Ge; Me': Al, B, P, Si, Group 1, 2, 3 elements in the periodic table, halogen; $0 < x \leq 1$; $1 \leq y \leq 3$; $1 \leq z \leq 8$); lithium metal; lithium alloys; silicon-based alloys; tin-based alloys; metal oxides such as SiO, SiO/C, $SiO_2$; metal oxides such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, and $Bi_2O_5$; a conductive polymer such as polyacetylene; various negative active materials such as Li-Co-Ni based materials.

However, since the dry insulating film formed in the method of one embodiment is mainly formed on the edge part of the positive electrode and plays a role of suppressing a short circuit between the electrodes, the dry electrode formed by the method of one embodiment can be mainly a positive electrode, and the electrode active material particle can be mainly the above-mentioned positive electrode active material particle.

Meanwhile, the conductive material is not particularly limited as long as it has high conductivity without causing a chemical change in the corresponding battery, and for example, graphite such as natural graphite and artificial graphite; carbon blacks such as carbon black, acetylene black, ketjen black, channel black, furnace black, lamp black, and thermal black; conductive fibers such as carbon fiber and metal fiber; metal powders such as carbon fluoride, aluminum, and nickel; conductive whiskey such as zinc oxide and potassium titanate; conductive metal oxides such as titanium oxide; conductive materials such as polyphenylene derivatives may be used. Specifically, the conductive material may include at least one selected from the group consisting of active carbon, graphite, carbon black, and carbon nanotube for uniform mixing and improvement of conductivity, and more specifically, it may include an active carbon.

The calender processing step for forming the above-mentioned insulating film for dry electrodes and the mixture film for dry electrode separately or together is a step of processing the dry insulating powder and dry electrode powder into a film. Through this calender processing step, the electrode film including the insulating film and the mixture film may be rolled and manufactured to have a thickness of 5 $\mu$m to 300 $\mu$m, or 7 to 30 $\mu$m.

At this time, the calender processing step may be performed, for example, by face to face rolls, wherein the roll temperature may be 50°C to 200°C, and the rotation speed of the roll may be in a range of 10 rpm to 50 rpm.

If this calender processing step is carried out, for example, an electrode film including a mixture film acting as an electrode mixture and an insulating film to be formed on at least one side edge part thereof can be manufactured.

Since such an electrode film does not contain a solvent, it has almost no fluidity, so it is easy to handle, and it can be processed into a desired shape, and can be used for manufacturing various types of electrodes. In addition, in the method of one embodiment, in the overall electrode process including the mixture film and the insulating film, the use of solvents and the use of drying processes/equipment for their removal can be completely omitted, whereby the manufacturing processability of the electrode can be significantly improved, and the problems appearing in the conventional dry electrode manufacturing process can be solved.

Meanwhile, after performing the above-mentioned calender processing step, an electrode film including an insulating film and a mixture film formed together or separately therethrough may be laminated on at least one surface of the metal current collector. For reference, the electrode film may be applied as a dry electrode of an energy storage device such as a secondary battery by itself without a separate metal current collector, but for the expression of additional mechanical and electrical properties, it can be applied as a dry electrode in a laminated state on a metal current collector.

The laminating step may be a step of rolling and attaching the electrode film to a predetermined thickness on a metal current collector. At this time, as described above, the insulating film can be laminated on the metal current collector in a state of being arranged on at least one side (or both sides) edge parts of the mixture film.

At this time, the metal current collector is not particularly limited so long as it has high conductivity without causing a chemical change in the battery. For example, stainless steel, aluminum, nickel, titanium, baked carbon, or a material formed by surface-treating a surface of copper or stainless steel with carbon, nickel, titanium, silver, or the like may be used. In addition, the metal current collector may be formed in various forms such as a film, a sheet, a foil, a net, a porous body, a foaming body, and a non-woven fabric structure.

The laminating step for the metal current collector can be carried out by a rolling roll, wherein the rolling roll may be maintained at a temperature of 80°C to 200°C.

According to another embodiment of the present disclosure, a dry electrode film or a dry electrode for an energy storage device manufactured by the method of the above-mentioned one embodiment can be provided.

The dry electrode film and the dry electrode may include a mixture film (film-like active material layer) formed by the above-mentioned method, and an insulating film (film-like insulating layer) formed on at least one side edge part thereof. More specifically, the dry electrode film or the like may include a film-like active material layer including an electrode active material particle, a conductive material and a fiberized organic binder; and a film-like insulating layer formed on at least one side edge part of the active material layer and including an insulating inorganic particle and a fiberized organic binder.

The dry electrode film itself may be used as a dry electrode for energy storage device such as a secondary battery, or may be laminated on a metal current collector or the like to be used as an intermediate for manufacturing a dry electrode.

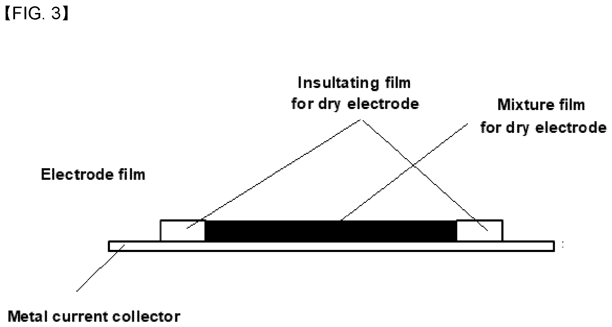

Fig. 3 is a cross-sectional view briefly showing an example of a dry electrode according to another embodiment of the present disclosure.

As also shown in Fig. 3, the dry electrode of another embodiment may be in the form of including the above-mentioned mixture film for dry electrode (film-like active material layer); and an insulating film (film-like insulating layer) for dry electrode formed on at least one side (or both side) edge parts thereof. In particular, in the dry electrode of another embodiment, as the insulating film is formed by the method of one embodiment, it can exhibit physical properties different from the insulating layer formed on the edge part of the electrode (positive electrode) formed through a conventional wet process.

For example, the insulating film for dry electrode does not have a residual solvent and may include the above-mentioned insulating inorganic particle and fiberized organic binder. Further, the insulating film exhibits, for example, a resistance of 500 MΩ or more, or 500 MΩ to 3000 MΩ, and may have excellent insulating properties.

At this time, the insulation resistance may be measured using a commercially available measuring instrument, for example, a FLUKE MULTIMETER and a HIOKI HiTESTER.

Further, since the insulating film is manufactured by a dry process, it may exhibit a porosity lower than an insulating layer formed by a conventional wet process. This is different from the formation of a number of pores in the drying process for solvent removal in the wet process, and in the dry process of one embodiment, it is expected that this drying process does not substantially proceed. More specifically, the insulating film may have a porosity of 10% or less, or 0 to 10%, or 0.5 to 8%.

At this time, the apparent density of only the insulating film is measured by subtracting the volume and weight of the current collector from the volume and weight of the electrode, and the porosity can be calculated by the following relational expression using the actual density calculated based on the actual density of each component and the composition.

$$\text{Porosity (\%)} = \{1 - (\text{apparent density/actual density})\} \times 100$$

Further, the bending resistance and flexibility of the electrode film including the insulating film and the mixture film prepared as described above can be evaluated using a plurality of cylindrical mandrels having a variable diameter according to the standard method of JIS K5600-5-1. More specifically, the porosity can be measured while providing a bend by lifting both side ends of the film in a state where the electrode film is in contact with a cylindrical mandrel having various diameters. As a result, by measuring the minimum diameter of the cylindrical mandrel at which cracks start to occur in the film, the bending resistance and flexibility of the electrode film can be evaluated. At this time, it can be evaluated that as the minimum diameter of the mandrel at which cracks start to occur is smaller, the electrode film has excellent bending resistance and flexibility.

As the electrode film included in the dry electrode of the other embodiment is manufactured by the method of one embodiment, for example, the minimum diameter of the cylindrical mandrel at which cracks start to occur is 10 mmΦ or less, 1 mmΦ or more and 10 mmΦ or less, or 3 mmΦ or more and 8 mmΦ or less, which can exhibit excellent bending resistance and flexibility. This is expected to be because the electrode film includes an insulating film having excellent flexibility. Further, the electrode film including the insulating film and the mixture film may have a thickness of 5 $\mu$m to 300 $\mu$m, or 7 to 30 $\mu$m.

Further, in the dry electrode of the other embodiment, the mixture film for dry electrode may include an electrode active material particle, a conductive material, and a fiberized organic binder. Such a mixture film may be produced by the conventional dry electrode manufacturing method or the like as already described above. Since each component thereof has already been described above, an additional description thereof will be omitted.

Further, the above-mentioned dry electrode may further include a metal current collector supporting the mixture film for dry electrode and the insulating film for dry electrode, and the type of the metal current collector is as described above.

Meanwhile, according to another embodiment of the present disclosure, an energy storage device including the dry electrode or the dry electrode film, for example, a secondary battery is provided. Such a secondary battery is a secondary battery in which an electrode assembly including a positive electrode, a negative electrode, and a separator is built into a battery case together with a lithium-containing non-aqueous electrolyte, wherein the positive electrode or the negative electrode may be in the form of including the dry electrode of the other embodiment.

However, as already described above, since the dry electrode including the insulating film in the edge part of the electrode is a positive electrode, a short circuit between the electrodes can be suppressed. Thus, in the secondary battery of another embodiment, the dry electrode may be included as a positive electrode.

The specific structures of the secondary battery and the energy storage device, and the like are the same as those well known before, except that they include the dry electrode of the other embodiment, and thus, additional description thereof will be omitted.

Hereinafter, a detailed description will be given based on Examples, Comparative Examples, and Experimental Examples so that a person having ordinary knowledge in this technical field can be easily understood.

<Example 1>: Production of dry electrode

Production of dry insulating powder

40 g of alumina ($Al_2O_3$) and 10 g of polytetrafluoroethylene (PTFE; 601X, Chemours) as an organic binder were charged into a blender and mixed at 15000 rpm for 1 minute to prepare a mixture. The temperature of the kneader was stabilized to 150°C, the mixture was added to a kneader and then operated at a speed of 50 rpm under a pressure of 1.1 atm for 5 minutes to obtain a mixture mass.

The mixture mass was charged into a blender and pulverized at 15000 rpm for 1 minute to obtain a dry insulating powder.

Production of powder for dry electrode

94 g of lithium manganese oxide (LMO, L25, POSCO) as a positive electrode active material, 3 g of active carbon and 10 g of carbon black as a conductive material, and 40 g of polytetrafluoroethylene (601X, Chemours) as an organic binder were charged into a blender and then mixed at 10000 rpm for 1 minute to prepare a mixture. The temperature of the kneader was stabilized to 150°C, and the mixture was added to a kneader and then operated at a speed of 50 rpm under a pressure of 1.1 atm for 5 minutes to obtain a mixture mass (mixture bulk).

The mixture mass was charged into a blender and pulverized at 10000 rpm for 40 seconds to obtain a powder for dry electrode.

Manufacture of electrode film containing insulating film and mixture film, and dry electrode

After that, the dry insulating powder and the dry electrode powder were charged into a wrap calender (roll diameter: 88mm, roll temperature: 85°C, 20rpm) in the form as shown in FIG 2 to form an insulating film for dry electrode and a mixture film, respectively.

Then, an electrode film in which the insulating film was arranged on both side edge parts of the mixture film was positioned on both sides of the aluminum foil as a metal current collector, and the electrode film was pressed on the metal current collector in a rolling roll maintained at 120°C, and laminated to manufacture a dry electrode.

<Example 2>: Manufacture of dry electrode

The dry electrode of Example 2 was manufactured by the same method as in Example 1, except that 30 g of alumina ($Al_2O_3$) and 20 g of polytetrafluoroethylene (PTFE; 601X, Chemours) were used during the production of the dry insulating powder.

<Example 3>: Manufacture of dry electrode

The dry electrode of Example 3 was manufactured by the same method as in Example 1, except that 20 g of alumina ($Al_2O_3$) and 30 g of polytetrafluoroethylene (PTFE; 601X, Chemours) were used during the production of the dry insulating powder.

<Comparative Example 1>: Manufacture of dry electrode

The dry electrode of Example 3 was manufactured by the same method as in Example 1, except that 45 g of alumina ($Al_2O_3$) and 5 g of polytetrafluoroethylene (PTFE; 601X, Chemours) were used during the production of the dry insulating powder.

<Experimental Examples Evaluation of physical properties of insulating film or electrode film

1. Film formation during calendering:
The dry insulating powder and the powder for dry electrode were charged into a wrap calender (roll diameter: 88 mm, roll temperature: 85°C, 20 rpm) to form an insulating film for dry electrodes and a mixture film, respectively. As a result, it was evaluated as "O" if the insulating film was produced into a film separated from the roll of a calender without physical damage, and as "X" if the dry insulating powder was not processed into a film while maintaining the powder state, or the produced film was adhered to the roll of a calender and cannot be separated without physical damage.

2. The thickness of the insulating film included in the dry electrode:
The thickness of the insulating film was measured using TESA mu-HITE equipment (measurement conditions: 0.63N, tip size: 4.5mm) manufactured by TESA Technology.

3. Edge non-uniformity of insulating film:

At the boundary between the mixture film and the insulating film, it is evaluated as "◎" if the edge thickness of the mixture film is 1 mm or less, as "O" if the edge thickness of the mixture film is greater than 1 mm and 2 mm or less, as "△" if the edge thickness of the mixture film is more than 2mm, and as "X" if the electrode film itself was not manufactured.

4. Insulation resistance of insulating film:
The insulation resistance of the insulating film was measured using a FLUKE MULTIMETER (measuring range: max. 500 MΩ; O.F: Over flow) and HIOKI HiTESTER (measuring range: max. 42 MΩ; O.L: Over limit).

5. Flexural resistance of electrode film:
According to the measurement standard of JIS K5600-5-1, each electrode film was brought into contact with cylindrical mandrels having various diameters, and then a bent was provided by lifting both ends of the film. The minimum diameter of the cylindrical mandrel at which cracks start to occur in the film was measured to evaluate the bending resistance of the electrode film.

6. Electrochemical test (confirm the presence/absence of side reaction of the insulating film)

First, the electrode films of Examples and Comparative Examples including the mixture film and the insulating film were used as the operating electrodes, and lithium metal was used as a counter electrode and a reference electrode. In addition, a three-electrode test cell was manufactured using the electrolyte having the following composition.

* Electrolyte composition:

EC/EMC=30/70, 0.7M LiPF6, 0.3M LiFSI
VS2 0.1wt%, ESa 1wt%, PS 0.5wt%, DFP 1wt%, LiBF4 0.2wt%

For such test cell, a three-electrode test CV-test was performed from 0V to 8.0V at a rate of 10mV/s. Through the three-electrode test, a side reaction of the insulating film in the electrolyte was confirmed (LSV test), and an electrochemical test was performed.

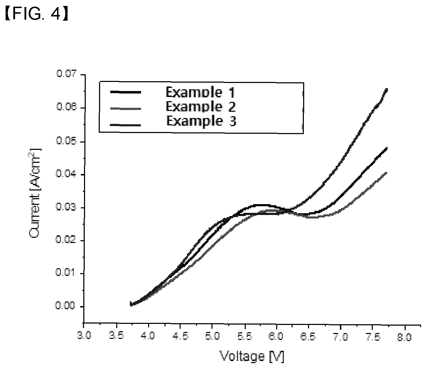

The test results of Examples 1 to 3 are shown together in FIG. 4 and Table 1. However, in the Comparative Example, the electrode film itself could not be manufactured, so the electrochemical test could not be performed.

Various physical properties of the insulating film or electrode film measured/evaluated by the above-mentioned method are summarized in Table 1 below.

[Table 1]

| | Film formation during calendering | Thickness of insulating film ($\mu$m) | Edge non-uniformity | Insulation resistance (MΩ) | Electrochemical test (presence/absence of side reaction) | Flexural resistance (mmΦ) |
|---|---|---|---|---|---|---|
| Example 1 | ○ | 10 | △ | >500 | No side reaction | 6 |
| Example 2 | ○ | 12 | ○ | >500 | No side reaction | 8 |
| Example 3 | ○ | 14 | ◎ | >500 | No side reaction | 8 |
| Comparative Example 1 | X | No film formation | X (film is not formed, and broken) | No film formation | No film formation | No film formation |

Referring to Table 1, it was confirmed that in Examples 1 to 3, an insulating film and an electrode film having excellent flexibility, insulation, and edge uniformity were formed, whereas in Comparative Example 1, the formation of the insulating film itself was impossible.

**Claims**

1.    A method for manufacturing a dry electrode for energy storage device, comprising the steps of:

dry-mixing 30 to 85% by weight of an insulating inorganic particle and 15 to 70% by weight of a fiberizable organic binder under application of a shearing force to form a dry insulating powder;

charging the dry insulating powder between a plurality of rolls and subjecting to calender processing to form an insulating film for dry electrode; and

laminating the insulating film for dry electrode on a metal current collector.

2. The method for manufacturing a dry electrode for energy storage device according to claim 1, wherein the step of forming a dry insulating powder comprises,

(a) forming a mixture containing the insulating inorganic particle and the organic binder;
(b) kneading the mixture at a temperature of 70°C to 200°C and a pressure equal to or higher than a normal pressure to form a mixture mass containing the insulating inorganic particle and a fiberized organic binder; and
(c) pulverizing the mixture mass to form the dry insulating powder.

3. The method for manufacturing a dry electrode for energy storage device according to claim 1 or 2, wherein the insulating inorganic particle comprises one or more inorganic oxide particles selected from the group consisting of $Al_2O_3$, $SiO_2$, $TiO_2$, MgO, CaO, ZnO, $Fe_2O_3$, kaolin, and boehmite.

4. The method for manufacturing a dry electrode for energy storage device according to claim 1 or 2, wherein the fiberizable organic binder comprises polytetrafluoroethylene-based polymer, polyvinylidene fluoride-based polymer, or polyolefin-based polymer.

5. The method for manufacturing a dry electrode for energy storage device according to claim 2, wherein the (b) kneading step is carried out at a speed of 10 rpm to 100 rpm for 1 minute to 30 minutes.

6. The method for manufacturing a dry electrode for energy storage device according to claim 2, wherein the (b) kneading step is carried out under a shear rate of 10/s to 500/s.

7. The method for manufacturing a dry electrode for energy storage device according to claim 2, wherein the (b) kneading step is carried out at a temperature of 70°C to 200°C and a pressure of 1 atm to 3 atm.

8. The method for manufacturing a dry electrode for energy storage device according to claim 2, wherein the (c) pulverizing step is carried out at a speed of 5000 rpm to 20000 rpm for 30 seconds to 10 minutes.

9. The method for manufacturing a dry electrode for energy storage device according to claim 1, wherein in the laminating step, the insulating film for dry electrode and a separately formed mixture film for dry electrode are laminated together on the metal current collector.

10. The method for manufacturing a dry electrode for energy storage device according to claim 1, wherein in the calender processing step, the dry insulating powder and a separately formed powder for dry electrode are charged between a plurality of rolls to form the insulating film for dry electrode and a mixture film for dry electrode together, and in the laminating step, the insulating film for dry electrode and the mixture film for dry electrode formed together are laminated on a metal current collector.

11. The method for manufacturing a dry electrode for energy storage device according to claim 9 or 10, wherein the mixture film for dry electrode is formed by charging a powder for dry electrode containing an electrode active material particle, a conductive material, and a fiberized organic binder between a plurality of rolls and subjecting to the calender processing.

12. The method for manufacturing a dry electrode for energy storage device according to claim 9 or 10, wherein in the laminating step, an electrode film containing the mixture film for dry electrode and the insulating film for dry electrodes formed on at least one side edge part thereof is laminated on the metal current collector.

13. The method for manufacturing a dry electrode for energy storage device according to claim 10, wherein in the calender processing step, the dry insulating powder is charged between the plurality of rolls on one side or both sides of the powder for dry electrode,
an electrode film, which comprises the mixture film for dry electrodes, and the insulating film for dry electrode formed on at least one side edge part thereof, is formed.

**14.** A dry electrode film for energy storage device, comprising:

a film-like active material layer containing an electrode active material particle, a conductive material, and a fiberized organic binder; and
a film-like insulating layer formed on at least one side edge part of the film-like active material layer and containing an insulating inorganic particle and a fiberized organic binder.

**15.** A dry electrode for energy storage device, comprising an electrode film which comprises:

a mixture film for dry electrode; and
an insulating film for dry electrode formed on at least one side edge part thereof,
wherein the insulating film for dry electrode comprises an insulating inorganic particle and a fiberized organic binder, and has a resistance of 500 MΩ or more.

**16.** The dry electrode for energy storage device according to claim 15, wherein the mixture film for dry electrode comprises an electrode active material particle, a conductive material, and a fiberized organic binder.

**17.** The dry electrode for energy storage device according to claim 15, wherein the insulating film for dry electrode has a thickness of 5 to 300 ,um.

**18.** The dry electrode for energy storage device according to claim 15, wherein in the electrode film containing the insulating film for dry electrode and the mixture film, a minimum diameter of a cylindrical mandrel at which cracks start to occur is 1 mmΦ or more and 10 mmΦ or less, when evaluating the presence/absence of occurrence off cracks using a plurality of cylindrical mandrels with varying diameters according to the standard method of JIS K5600-5-1.

**19.** The dry electrode for energy storage device according to claim 15, which further comprises a metal current collector that supports the mixture film for dry electrode and the insulating film for dry electrode.

**20.** A secondary battery in which an electrode assembly containing a positive electrode, a negative electrode and a separator is built into a battery case together with a lithium-containing non-aqueous electrolyte, wherein the positive electrode or the negative electrode comprises the dry electrode film of claim 14 or the dry electrode of claim 15.

【FIG. 1】

inorganic particles          Organic binder

Powder for dry electrode

○ Mixing and kneading (kneader)

○ Pulverizaiton

○ Calender processing

○ Lamination

【FIG. 2】

【FIG. 3】

Insultating film
for dry electrode

Mixture film
for dry electrode

Electrode film

Metal current collector

【FIG. 4】

## INTERNATIONAL SEARCH REPORT

| International application No. |
| --- |
| **PCT/KR2022/000117** |

| A. | CLASSIFICATION OF SUBJECT MATTER |
| --- | --- |

**H01M 4/04**(2006.01)i; **H01M 4/139**(2010.01)i; **H01M 4/62**(2006.01)i; **H01M 4/66**(2006.01)i; **H01M 10/052**(2010.01)i; **H01M 10/42**(2006.01)i; **H01M 50/586**(2021.01)i

According to International Patent Classification (IPC) or to both national classification and IPC

| B. | FIELDS SEARCHED |
| --- | --- |

Minimum documentation searched (classification system followed by classification symbols)

H01M 4/04(2006.01); H01G 9/058(2006.01); H01M 4/13(2010.01); H01M 4/133(2010.01); H01M 4/134(2010.01); H01M 4/139(2010.01); H01M 4/36(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이차전지(secondary battery), 건식 전극(dry electrode), 건식 절연 필름(dry insulating film), 섬유화된 바인더(fibrilized binder), 무기 입자(inorganic particle), 캘린더(calender)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2019-079633 A (GS YUASA CORP.) 23 May 2019 (2019-05-23)<br>See claims 1-5; and paragraphs [0029], [0036], [0040] and [0041]. | 1-20 |
| A | KR 10-2021-0005566 A (MAXWELL TECHNOLOGIES, INC.) 14 January 2021 (2021-01-14)<br>See entire document. | 1-20 |
| A | JP 2016-115567 A (NIPPON ZEON CO., LTD. et al.) 23 June 2016 (2016-06-23)<br>See entire document. | 1-20 |
| A | WO 2018-164076 A1 (RICOH COMPANY, LTD.) 13 September 2018 (2018-09-13)<br>See entire document. | 1-20 |
| A | JP 2012-129536 A (NIPPON ZEON CO., LTD.) 05 July 2012 (2012-07-05)<br>See entire document. | 1-20 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **12 April 2022** | **12 April 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.

**PCT/KR2022/000117**

| Patent document cited in search report | | | Publication date (day/month/year) | Patent family member(s) | | | Publication date (day/month/year) |
|---|---|---|---|---|---|---|---|
| JP | 2019-079633 | A | 23 May 2019 | JP | 6935722 | B2 | 15 September 2021 |
| KR | 10-2021-0005566 | A | 14 January 2021 | CN | 111989802 | A | 24 November 2020 |
| | | | | EP | 3788665 | A1 | 10 March 2021 |
| | | | | JP | 2021-520605 | A | 19 August 2021 |
| | | | | US | 2021-0249657 | A1 | 12 August 2021 |
| | | | | WO | 2019-213068 | A1 | 07 November 2019 |
| JP | 2016-115567 | A | 23 June 2016 | None | | | |
| WO | 2018-164076 | A1 | 13 September 2018 | CN | 110383538 | A | 25 October 2019 |
| | | | | EP | 3593390 | A1 | 15 January 2020 |
| | | | | JP | 2019-061943 | A | 18 April 2019 |
| | | | | KR | 10-2019-0113912 | A | 08 October 2019 |
| | | | | KR | 10-2022-0003128 | A | 07 January 2022 |
| | | | | US | 2020-0119333 | A1 | 16 April 2020 |
| JP | 2012-129536 | A | 05 July 2012 | CN | 101185149 | A | 21 May 2008 |
| | | | | CN | 101185149 | B | 13 June 2012 |
| | | | | CN | 102522220 | A | 27 June 2012 |
| | | | | JP | 4978467 | B2 | 18 July 2012 |
| | | | | KR | 10-1310520 | B1 | 23 September 2013 |
| | | | | KR | 10-2008-0010433 | A | 30 January 2008 |
| | | | | US | 2009-0224198 | A1 | 10 September 2009 |
| | | | | WO | 2006-126665 | A1 | 30 November 2006 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210007628

- KR 1020220000797